Europäisches Patentamt

European Patent Office

Office européen des brevets

(11) Numéro de publication: **0 268 947**

**A1**

## DEMANDE DE BREVET EUROPEEN

(21) Numéro de dépôt: 87116717.7

(22) Date de dépôt: **12.11.87**

(51) Int. Cl.⁴: **H02H 9/00** , H01R 13/719

(30) Priorité: **17.11.86 FR 8615950**

(43) Date de publication de la demande:
**01.06.88 Bulletin 88/22**

(84) Etats contractants désignés:
**AT BE DE ES FR IT**

(71) Demandeur: **TELIC ALCATEL**
**12, rue de la Baume**
**F-75008 Paris(FR)**

(72) Inventeur: **Cardot, Gérard**
**17 Allée des Prés La Chapelle Saint Pierre**
**F-60730 Ste-Geneviève(FR)**
Inventeur: **Dortu, Giovanni**
**1, rue du Plessis Bouchard**
**F-95370 Montigny Les Cormeilles(FR)**

(74) Mandataire: **Weinmiller, Jürgen et al**
**Lennéstrasse 9 Postfach 24**
**D-8133 Feldafing(DE)**

(54) **Dispositif de protection d'un équipement terminal chez un abonné.**

(57) Dispositif de protection d'un équipement terminal chez un abonné téléphonique.

Le dispositif de protection de l'invention est
monté en série avec la ligne ; il comporte soit un
circuit de protection contre les surtensions (1), soit
un filtre (2) de protection contre les radiofréquences,
soit les deux. Il assure la protection d'un équipement
terminal (poste, terminal de données, télécopieur,
etc...) contre les perturbations en mode différentiel et
en mode commun. Le dispositif est monté dans une
prise de protection soit de type mural, soit du type
intermédiaire amovible se montant sur une prise
murale classique ; dans les deux types
l'éequipement terminal est raccordé à la prise de
protection par sa prise de type mâle.

FIG.3

# Dispositif de protection d'un équipement terminal chez un abonné téléphonique

L'invention concerne la protection, chez l'abonné, d'un équipement terminal d'abonné raccordé à une ligne téléphonique, la protection concernant les radiofréquences et les parasites, ou encore les surtensions acheminées par la ligne jusqu'à l'équipement terminal d'abonné. Par équipement terminal d'abonné il faut entendre non seulement le poste téléphonique, mais également tout autre appareil relié à une ligne téléphonique, tel que par exemple un appareil pour l'interrogation de banques de données, un télécopieur.

Il est bien connu que, dans certaines zones géographiques, le fonctionnement des équipements terminaux reliés à une ligne téléphonique est perturbé par des émissions radio-électriques ou des décharges électrostatiques.

D'autre part si des dispositifs de protection contre les surtensions sont généralement prévus au central téléphonique il n'existe généralement pas, chez l'abonné, de dispositifs de protection contre de telles surtensions, qui sont le plus souvent provoquées par la foudre.

L'invention a pour but de protéger un abonné contre les perturbations dues aux radiofréquences.

Un autre but de l'invention est de protéger un abonné contre les surtensions. Bien entendu les deux types de protections peuvent éventuellement exister simultanément.

Un autre but de l'invention est de mettre à disposition de l'abonné désirant se protéger, un dispositif de protection peu encombrant, d'utilisation très simple, et ne nécessitant pas de modification du ou des équipements terminaux à protéger.

L'invention a pour objet un dispositif de protection d'un équipement terminal, chez un abonné, contre les radiofréquences et les parasites acheminés par une ligne téléphonique, caractérisé par le fait qu'il est constitué par un filtre en série avec la ligne téléphonique, ledit filtre comprenant, en série entre une première borne d'entrée et une première borne de sortie une première, une deuxième, une troisième et une quatrième inductances, et en série entre une deuxième borne d'entrée et une deuxième borne de sortie, une cinquième, une sixième, une septième et une huitième inductances, que les première, deuxième, cinquième et sixième inductances ont même valeur, que les première et cinquième inductances ont même circuit magnétique, que les deuxième et sixième inductances ont même circuit magnétique, que les troisième et quatrième inductances ont même valeur et des circuits magnétiques différents, que les quatrième et huitième inductances ont même valeur et même circuit magnétique, qu'un premier point commun aux première et deuxième inductances est relié par un premier condensateur à une masse, qu'un deuxième point commun aux cinquième et sixième inductances est relié par un deuxième condensateur à la masse, qu'un troisième point commun aux deuxième et troisième inductances est relié par un troisième condensateur à la masse, qu'un quatrième point commun aux sixième et septième inductances est relié par un quatrième condensateur à la masse, que les troisième et quatrième points sont reliés par un cinquième condensateur, et que les premier, deuxième, troisième et quatrième condensateurs ont même valeur.

L'invention a également pour objet un dispositif de protection d'un équipement terminal, chez un abonné, contre les surtensions acheminées par une ligne téléphonique, caractérisé par le fait qu'il comprend une première thermistance entre une première borne d'entrée et une première borne de sortie, une deuxième thermistance entre une deuxième borne d'entrée et une deuxième borne de sortie, un premier limiteur de tension entre les bornes de sortie, un deuxième limiteur de tension entre la première borne de sortie et une masse, et un troisième limiteur de tension entre la deuxième borne de sortie et ladite masse.

L'invention sera bien comprise à l'aide de la description qui va suivre d'exmples de réalisation illustrées par les figures annexées dans lesquelles :

-la figure 1 représente un filtre de protection de l'invention contre les radiofréquences et les parasites,

-la figure 2 représente un circuit de protection de l'invention contre les surtensions,

-la figure 3 représente un dispositif de protection de l'invention contre les surtensions et contre les radiofréquences,

-la figure 4 représente une prise de protection,

-la figure 5 représente une prise de protection de type mural.

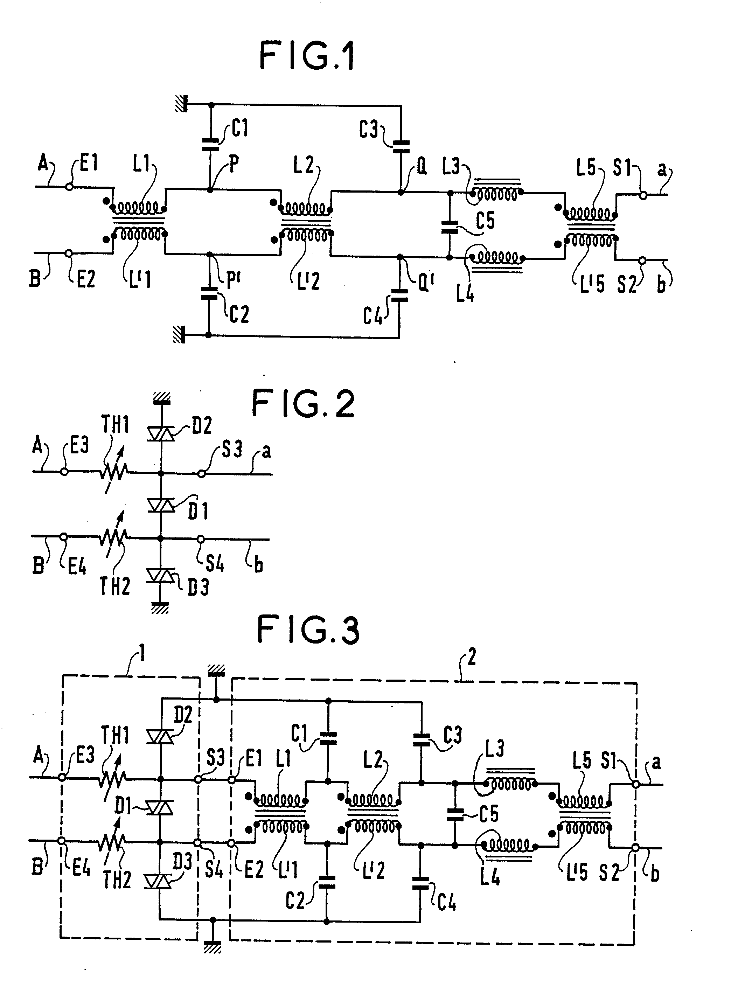

La figure 1 est un schéma d'un filtre de protection contre les radiofréquences et les parasites, ayant deux bornes d'entrée E1, E2 reliées à des fils A et B d'une ligne d'abonné et deux bornes de sortie S1, S2 reliée à deux fils a et b d'un équipement terminal d'abonné, par exemple un poste téléphonique. Les bornes E1 et S1 sont reliées par des inductances L1, L2, L3, L5 en série, et les bornes E2 et S2 sont reliées par des inductances L'1, L'2, L4 et L'5 en série. Les inductances L1 et L'1 ont même valeur et même circuit magnétique, les inductances L2 et L'2 ont même valeur et même circuit magnétique, la valeur de ces inductances étant égale à celle des inductan-

ces L1 et L'1. Les inductances L3 et L4 ont même valeur et des circuits magnétiques différents ; les inductances L5 et L'5 ont même valeur et même circuit magnétique. Les circuits magnétiques sont par exemple des tores. Un point P commun aux inductances L1 et L2 est relié à la masse par un condensateur C1, et un point P' commun aux inductances L'1 et L'2 est relié à la masse par un condensateur C2 ; un point Q commun aux inductances L2 et L3 est relié à la masse par un condensateur C3 et un point Q' commun aux inductances L'2 et L4 est relié à la masse par un condensateur C4 ; les condensateurs C1, C2, C3 et C4 ont même valeur. Les points Q et Q' sont reliés par un condensateur C5.

Le filtre est monté sur un circuit imprimé et comporte trois étages :
-un premier étage, passe-bas en mode différentiel, contre les parasites en mode commun, constitué des inductances L1, L'1, L2, L'2 et des condensateurs C1, C2, C3, C4.

Les conducteurs sont reliés à une équipotentielle réalisée par un plan métallique sur une face du circuit imprimé, ledit plan étant éventuellement relié à la terre pour obtenir un meilleur filtrage des parasites en mode commun ;
-un deixème étage destiné à atténuer les tensions en mode différentiel, en dehors de la bande de parole, il est constitué du condensateur C5 et des inductances L3 et L4 ;
-un troisième étage affaiblit les tensions résiduelles de mode commun ; il est constitué des inductances L5 et L'5.

Les inductances et condensateurs ont par exemple les valeurs suivantes :
$L1 = L'1 = L2 = L'2 = 18$ millihenrys
$L3 = L4 = 220$ microhenrys
$L5 = L'5 = 2,2$ millihenrys
$C1 = C2 = C3 = C4 = 2,2$ nanofarads
$C5 = 20$ nanofarads.

Avec ces valeurs, le filtre donne une atténuation supérieure à 45dB de 100 kHz à 30 MHz et d'au moins 80dB de 200 kHz à 10 MHz, pour des signaux perturbateurs en mode commun ; pour les signaux en mode différentiel, le filtre n'introduit qu'une faible atténuation de l'ordre de 1dB, dans la bande de parole et en particulier dans la bande 0-10 kHz, et donne une atténuation supérieure à 30dB à partir de 200 kHz.

Un tel filtre assure une protection efficace contre les radiofréquences et les parasites.

La figure 2 est un schéma d'un circuit de protection contre les surtensions comportant, entre une borne d'entrée E3 et une borne de sortie S3, une thermistance TH1, entre une autre borne d'entrée E4 et une autre borne de sortie S4 une autre thermistance TH2, un limiteur de tension D1 entre les deux bornes de sortie S3 et S4, un limiteur de tension D2 entre la borne de sortie S3 et la masse et un limiteur de tension entre la borne de sortie S4 et la masse. Les deux thermistances TH1 et TH2 sont identiques et ont un coefficient de température positif ; les trois limiteurs de tension D1, D2, D3 sont identiques et sont par exemple constitués chacun par deux diodes zéner tête bêche ; bien entendu les limiteurs doivent laisser passer le courant de sonnerie, de sorte que leur tension de fonctionnement, c'est-à-dire d'écrêtage, est supérieure à la tension crête du signal de sonnerie ; cette tension d'écrêtage est par exemple de l'ordre de 250 volts.

Les bornes d'entrée E3 et E4 sont reliées à la ligne d'abonné, fils A et B et les bornes de sortie S3 et S4 sont reliées à un équipement terminal, fils a et b, tel que par exemple un poste téléphonique.

Le circuit de protection de la figure 2 protège l'équipement terminal contre les tensions élevées provenant de la ligne, tant en mode différentiel qu'en mode commun, la masse du circuit étant reliée à la terre à cet effet.

La figure 3 est un schéma d'un dispositif de protection de l'invention destiné à assurer la protection contre les surtensions et contre les radiofréquences. A cet effet il est constitué par l'association du circuit contre les surtensions de la figure 2, et du filtre de la figure 1.

Le circuit 1 et le filtre 2 sont en série, les bornes de sortie S3 et S4 du circuit 1 étant reliées aux bornes d'entrée E1 et E2 du filtre 2.

Le circuit et le filtre sont montés sur une même plaque de circuit imprimé dont une face comporte une métallisation constituant la masse tant pour le circuit 1 que pour le filtre 2.

Les bornes d'entrée E3 et E4 du circuit 1 sont reliées à une ligne d'abonné, fils A et B, et les bornes de sortie S1 et S2 du filtre sont reliés à un équipement terminal, fils a et b, tel que par exemple un poste téléphonique.

Un dispositif de protection, selon l'une des réalisations illustrées par les figures 1, 2 et 3, est incorporé dans une prise de protection.

Les équipements terminaux, chez un abonné sont généralement amovibles, c'est-à-dire qu'ils comportent une prise mâle venant s'enficher dans une prise femelle, généralement fixée à un mur.

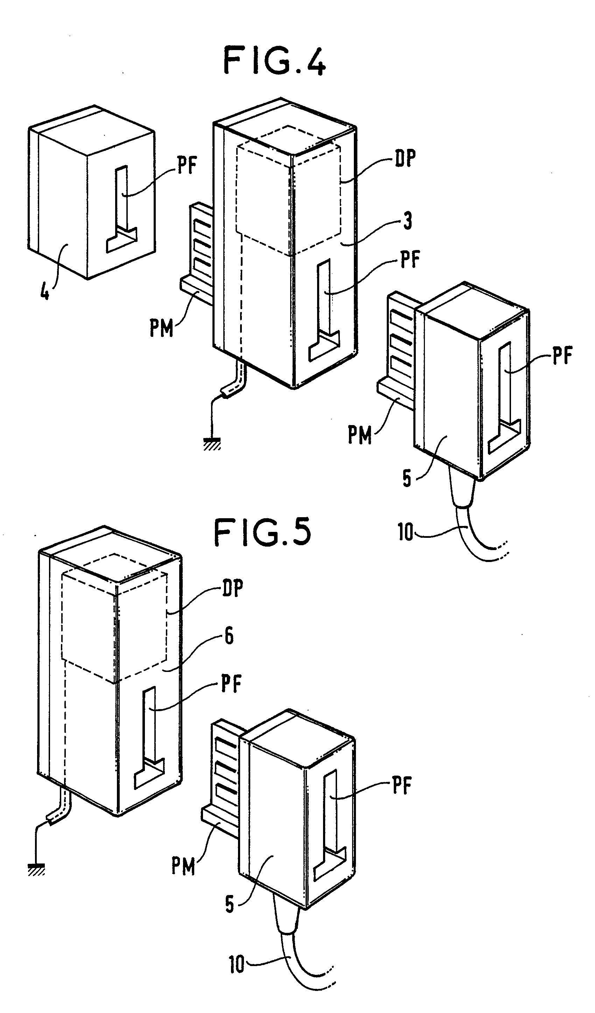

Les figures 4 et 5 représentent deux modes de réalisation d'une prise de protection.

La figure 4 représente une prise murale 4 classique équipée d'une prise femelle PF, une prise de protection 3, et une prise terminale 5 équipée d'une prise mâle PM et d'une prise femelle PF et reliée par un cordon 10 à un équipement terminal. La prise de protection 3 est une prise intermédiaire équipée d'une prise mâle PM et d'une prise femelle PF et comporte un dispositif de protection DP.

Les prises mâles et femelles sont des prises normalisées par l'Administration. Dans la prise de protection 3 les bornes d'entrée du dispositif de protection sont reliées à la prise mâle PM et les bornes de sortie sont reliées à la prise femelle PF. La prise de protection comporte également une borne, ou un fil de terre, relié à la masse du dispositif de protection DP.

La prise de protection de la figure 4 se monte donc sur la prise murale 4 et la prise terminale 5 s'enfiche sur la prise de protection, dont le fil de terre ou la borne est relié à la terre afin d'assurer une protection efficace contre les tensions et/ou les signaux radiofréquences en mode commun. Cette prise de protection se monte donc chez un abonné sans modification de son installation existante (prise murale) ni de son ou ses équipements terminaux.

La figure 5 représente une prise de protection 6 et une prise terminale 5 d'un équipement terminal.

La prise de protection 6 est de type mural et se fixe au mur au lieu et place d'une prise murale 4 classique de la figure 4. Cette prise de protection ne comporte donc pas de prise mâle, mais uniquement une prise femelle PF ; le dispositif de protection DP a sa masse reliée soit à une borne de ladite prise de protection soit à un fil de terre sortant de ladite prise de protection. Les bornes d'entrée du dispositif de protection sont reliées à la ligne d'abonné et les bornes de sortie sont reliées à la prise femelle PF, la borne ou le fil de terre étant relié à la terre. Comme dans la figure 4, la prise terminale 5 s'enfiche sur la prise femelle de la prise de protection.

La prise de protection de la figure 5 peut donc être utilisée dans toute installation nouvelle, à la place d'une prise murale classique. Elle peut également être utilisée dans une installation existante en remplacement d'une prise murale classique.

Bien entendu la prise de protection peut comporter plus d'une prise femelle, deux par exemple pour le raccordement de plusieurs équipements terminaux.

On notera que la masse du dispositif de protection n'est pas reliée, dans la réalisation de la figure 4, à la prise mâle PM de la prise de protection ; ceci est uniquement dû au fait que les prises mâles et femelles actuellement normalisées ne comportent pas de contact destiné à être relié à la terre, ou à la masse d'un circuit, et si les prises mâles et femelle avec contact de terre étaient normalisées, il est bien entendu que la masse du dispositif de protection serait relié au contact terre de la prise mâle de la prise de protection 3, et que le contact terre de la prise femelle de la prise murale 4 serait relié à la terre.

Enfin la prise de protection peut bien entendu être équipée de prises mâles et femelle d'un autre type que celles représentées et qui correspondent aux prises normalisées par l'Administration française.

**Revendications**

1/ Dispositif de protection d'un équipement terminal, chez un abonné, contre les radiofréquences et les parasites acheminés par une ligne téléphonique, caractérisé par le fait qu'il est constitué par un filtre (2) en série avec la ligne téléphonique, ledit filtre comprenant, en série entre une première borne d'entrée (E1) et une première borne de sortie (S1) une première (L1), une deuxième (L2), une troisième (L3) et une quatrième (L5) inductances, et en série entre une deuxième borne d'entrée (E2) et une deuxième borne de sortie (S2), une cinquième (L'1), une sixième (L'2), une septième (L4) et une huitième (L'5) inductances, que les première, deuxième, cinquième et sixième inductances ont même valeur, que les première (L1) et cinquième (L'1) inductances ont même circuit magnétique, que les deuxième (L2) et sixième (L'2) inductances ont même circuit magnétique, que les troisième (L3) et quatrième (L4) inductances ont même valeur et des circuits magnétiques différents, que les quatrième (L5) et huitième (L'5) inductances ont même valeur et même circuit magnétique, qu'un premier point (P) commun aux première et deuxième inductances est relié par un premier condensateur (C1) à une masse, qu'un deuxième point (P') commun aux cinquième et sixième inductances est relié par un deuxième condensateur (C2) à la masse, qu'un troisième point (Q) commun aux deuxième et troisième inductances est relié par un troisième condensateur (C3) à la masse, qu'un quatrième point (Q') commun aux sixième et septième inductances est relié par un quatrième condensatuer (C4) à la masse, que les troisième (Q) et quatrième (Q') points sont reliés par un cinquième condensateur (C5), et que les premier, deuxième, troisième et quatrième condensateurs ont même valeur.

2/ Dispositif de protection d'un équipement terminal, chez un abonné, contre les surtensions acheminées par une ligne téléphonique, caractérisé par le fait qu'il comprend une première thermistance (TH1) entre une première borne d'entrée (E3) et une première borne de sortie (S3), une deuxième thermistance (TH2) entre une deuxième borne d'entrée (E4) et une deuxième borne de sortie (S4), un premier limiteur de tension (D1) entre les bornes de sortie, un deuxième limiteur de tension (D2) entre la première borne de sortie (S3) et une masse, et un troisième limiteur de tension (D3) entre la deuxième borne de sortie (S4) et ladite masse.

3/ Dispositif de protection d'un équipement terminal, chez un abonné, contre les perturbations extérieures acheminées par une ligne téléphonique, caractérisé par le fait qu'il comprend, en série avec la ligne un circuit de protection contre les surtensions (1) et un filtre (2) de protection contre les radiofréquences ayant une masse commune, que ledit circuit de protection contre les surtensions comprend une première thermistance (TH1) entre une première borne d'entrée (E3) et une première borne de sortie (S3), une deuxième thermistance (TH2) entre une deuxième borne d'entrée (E4) et une deuxième borne de sortie (S4), un premier limiteur de tension (D1) entre les bornes de sortie, une deuxième limiteur de tension (D2) entre la première borne de sortie (S3) et une masse, et un troisième limiteur de tension (D3) entre la deuxième borne de sortie (S4) et ladite masse, les première et deuxièmes bornes d'entrée étant reliées à la ligne téléphonique, et que ledit filtre de protection contre les radiofréquences comprend, en série entre une troisième borne d'entrée (E1) et une troisième borne de sortie (S1) une première (L1), une deuxième (L2), une troisième (L3) et une quatrième (L5) inductances, et en série entre une quatrième borne d'entrée (E2) et une quatrième borne de sortie (S2), une cinquième (L'1), une sixième (L'2), une septième (L4) et une huitième (L'5) inductances, les troisièmes et quatrième bornes d'entrée étant reliées, respectivement aux première (S3) et deuxième (S4) bornes de sortie du circuit de protection contre les surtensions, que les première, deuxième, cinquième et sixième inductances ont même valeur, que les première (L1) et cinquième (L'1) inductances ont même circuit magnétique, que les deuxième (L2) et sixième (L'2) inductances ont même circuit magnétique, que les troisième (L3) et quatrième (L4) inductances ont même valeur et des circuits magnétiques différents, que les quatrième (L5) et huitième (L'5) inductances ont même valeur et même circuit magnétique, qu'un premier point (P) commun aux première et deuxième inductances est relié par un premier condensateur (C1) à une masse, qu'un deuxième point (P') commun aux cinquième et sixième inductances est relié par un deuxième condensateur (C2) à la masse, qu'un troisième point (Q) commun aux deuxième et troisième inductances est relié par un troisième condensateur (C3) à la masse, qu'un quatrième point (Q') commun aux sixième et septième inductances est relié par un quatrième condensateur (C4) à la masse, que les troisième (Q) et quatrième (Q') points sont reliés par un cinquième condensateur (C5), et que les premier, deuxième, troisième et quatrième condensateurs ont même valeur.

# FIG.1

# FIG.2

# FIG.3

# FIG.4

PF

DP

4

3

PM

PF

PF

PM

5

10

# FIG.5

DP

6

PF

PF

PM

5

PM

10

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | WO-A-8 500 473 (ZAMBURRO)<br>* Figure 1; page 2, ligne 5 - page 3, ligne 15 *<br>--- | 1-3 | H 02 H 9/00<br>H 01 R 13/66 |
| A | DE-A-3 400 899 (FELLER)<br>* Figures 1-3; revendication 1 *<br>--- | 1-3 | |
| A | US-A-4 584 622 (CROSBY et al.)<br>* En entier *<br>--- | 1-3 | |
| A | WO-A-8 203 733 (PHILIPS)<br>* Figure 1; résumé *<br>--- | 1-3 | |
| A | US-A-4 191 985 (PHILLIPS)<br>* Figures 1,3; résumé; revendiction 1 *<br>----- | 1-3 | |

DOMAINES TECHNIQUES
RECHERCHES (Int. Cl.4)

H 02 H
H 01 R

Le présent rapport a été établi pour toutes les revendications

| Lieu de la recherche | Date d'achèvement de la recherche | Examinateur |
|---|---|---|
| LA HAYE | 09-02-1988 | KOLBE W.H. |